# EUROPÄISCHE PATENTSCHRIFT

(11) **EP 1 216 743 B1**
(45) Veröffentlichungstag und Bekanntmachung des Hinweises auf die Patenterteilung: **16.03.2011**
(21) Anmeldenummer: 00128335.7
(22) Anmeldetag: 22.12.2000
(51) Int. Cl.: B01D 50/00, B01D 46/24

(54) **Filtersystem**
Filter system
Systéme de filtre

(43) Veröffentlichungstag der Anmeldung: 26.06.2002
(73) Patentinhaber: Mann + Hummel GmbH, 71638 Ludwigsburg (DE)
(72) Erfinder: Kopec, Edvard, 94036 Passau (DE); Winter, Manfred, 74906 Bad Pappenau (DE); Greif, Volker, Dr., 76376 Harthausen (DE)
(74) Vertreter: Voth, Gerhard

(56) Entgegenhaltungen:
- DE-A- 19 756 247
- US-A- 4 243 397
- US-A- 4 491 460
- US-A- 4 813 385

## Beschreibung

Es wird ein Filtersystem für die Ansaugluft von Brennkraftmaschinen beschrieben.

Aus der DE 197 56 247 ist ein Luftfilter bekannt, dieses dient insbesondere zur Reinigung der von einem Verbrennungsmotor angesaugten Luft. Der Luftfilter hat eine im Wesentlichen ovale oder elyptische Form. Diese hat den Zweck eventuell eindringendes Wasser besser ablaufen zu lassen und die Luftdurchsatzkapazität zu verbessern.

Ein Nachteil dieser Bauform ist darin zu sehen, dass bei einer sehr hohen Staubbeladung dieses Filterelements, der Differenzdruck zwischen Rohluftseite und Reinluftseite sehr stark ansteigt, und dies zu einem raschen Verstopfen des Filters führt. Es wurde deshalb auf diesem Filterelement ein zusätzlicher Außenmantel aufgebracht, welcher gröbere Teilchen zurückhalten soll. Dieser Außenmantel benötigt jedoch wiederum zusätzlichen Bauraum so dass die Platzsparende Wirkung des ovalen Filters nicht oder nur sehr eingeschränkt zur Geltung kommt.

Aus der US 4,813,385 ist eine Brennkraftmaschine bekannt, die ein zylindrisches oder ovales Filterelement beschreibt. Dem Filterelement ist ein Drehströmungsabscheider vorgeordnet. Das Filterelement selbst befindet sich in einem kastenförmigen Gehäuse, das an die Brennkraftmaschine angeflanscht ist und im Wesentlichen eine rechteckförmige Struktur aufweist.

Aus der DE 196 18 198 ist ein Abscheider bekannt, dieser dient dazu Feststoffpartikel aus einem Gasstrom abzuscheiden. Hierzu ist eine Filterpatrone vorgesehen wobei die Filterpatrone in einem Gehäuse angeordnet ist. Das Gehäuse weist ferner ein Leitblech auf, welches den Zweck verfolgt einen teil der einströmenden Feststoffpartikel direkt in einen Auffangbehälter zu fördern, ohne die Filterpatrone zu beladen. Ein Nachteil dieses sogenannten Vorabscheiders liegt darin, dass nur relativ große Schmutzpartikel abgeleitet werden. Ein Großteil der Staub- und Schwebstoffe gelangt auf die Filterpatrone und führt zu einem raschen Aufbau eines Filterkuchens, welcher den Durchflusswiderstand ansteigen lässt.

Der Erfindung liegt die Aufgabe zugrunde, die genannten Nachteile zu vermeiden und ein Filtersystem zu schaffen, welches einen hohen Abscheidegrad aufweist und gleichzeitig eine lange Standzeit. Gerade bei der Verwendung bei Landmaschinen, Nutzfahrzeugen oder anderen Maschinen ist ein sehr hoher Abscheidegrad zwingend erforderlich. Trotzdem sollte das benötigte Filtersystem wenig Bauvolumen aufweisen.

Diese Aufgabe wird durch den unabhängigen Anspruch 1 gelöst.

Der wesentliche Vorteil der Erfindung ist darin zu sehen, dass die Kombination eines ovalen Filterelements, welches wenig Bauraum benötigt, mit einem Zyklonvorabscheider eine besonders kompakte Bauform ermöglicht.

Gemäß der Erfindung ist innerhalb des Filtersystems und innerhalb des Hauptfilterelements ein Sekundärelement vorgesehen. Dieses verbleibt beim Austausch des Hauptfilterelements auf dem Reinluftanschluss so dass das Einbringen von Staub oder Schmutz in den Reinluftbereich beim Wechsel des Hauptfilterelements vermieden wird.

Weiterhin ist vorgesehen für das Sekundärelement einen Vlieswerkstoff zu verwenden. Dieser Vlieswerkstoff hat den Vorteil, dass ein guter Schutz des Reinluftbereichs gewährleistet ist bei gleichzeitigem geringem Durchflusswiderstand.

In einer weiteren vorteilhaften Ausgestaltung, welche die Befestigung des Hauptfilterelements betrifft, ist das Hauptfilterelement an dem, dem Reinluftstutzen zugewandten Ende mit einer außen liegenden Radialdichtung versehen. Zur zuverlässigen Abstützung des Hauptfilterelements im Gehäuse dient eine auf der gegenüberliegenden Seite angeordnete Druckfeder, die sich einerseits an dem Hauptfilterelement und andererseits an einem Gehäusedeckel abstützt.

Diese und weitere Merkmale von bevorzugten Weiterbildungen der Erfindung gehen außer aus den Ansprüchen auch aus der Beschreibung und den Zeichnungen hervor.

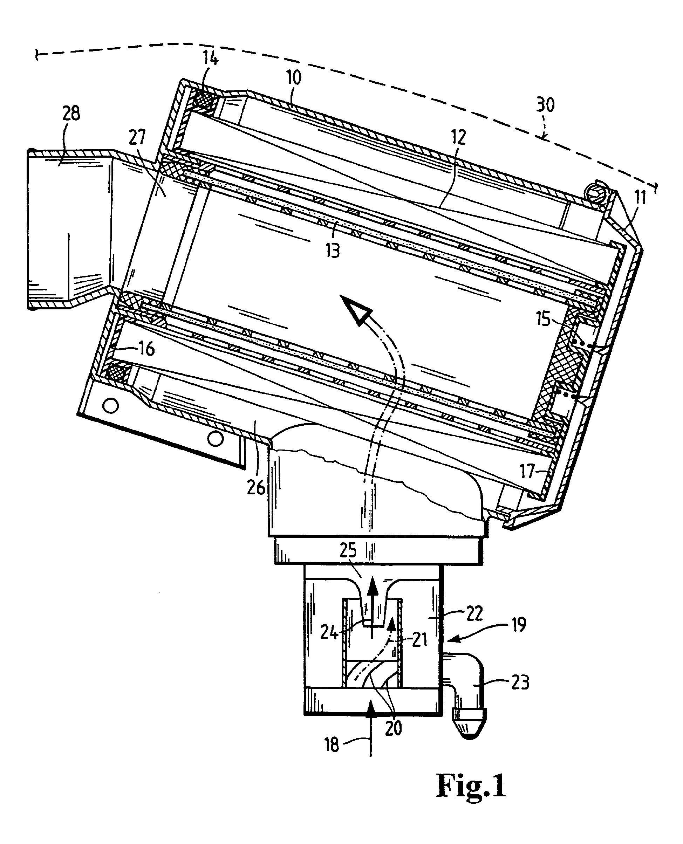

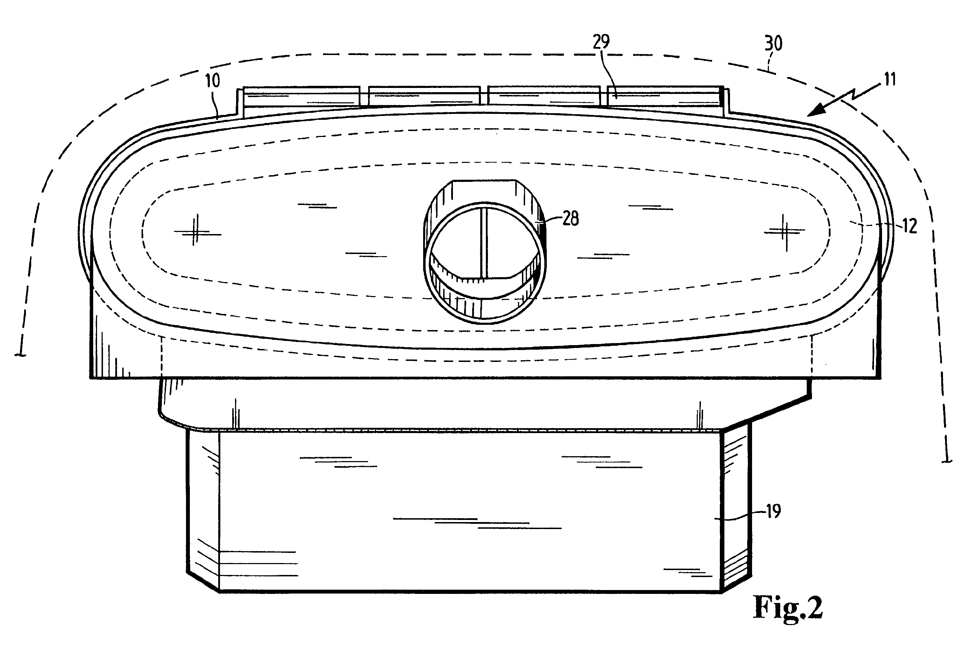

Das Filtersystem wird in den Zeichnungen und Figur 1 und Figur 2 näher beschrieben.
Figur 1 zeigt einen Schnitt durch das Filter.
Figur 2 zeigt eine Draufsicht von der Reinluftseite her gesehen.

Das Filtersystem gemäß Figur 1 besteht aus einem Gehäuse 10, das mit einem schwenkbaren Deckel 11 verschlossen werden kann. In dem Gehäuse 10 befindet sich ein Filterelement 12 als Hauptfilterelement, sowie ein Filterelement 13 als Sekundärelement bzw. Sicherheitsfilter. Das Filterelement 12 ist an der linksseitigen Stirnseite mit einem Dichtelement 14 versehen und liegt dort an dem Gehäuse an. An dem rechtsseitigen Ende wird das Filterelement über eine Feder 15 an dem Deckel 11 abgestützt. Die Druckfeder bewirkt eine Sicherung des Filterelements in der hier gezeigten Stellung. Das Filterelement 12 besteht aus einem zick-zack-förmig gefalteten Filterpapier oder Filter vlies, welches von zwei Endscheiben 16, 17 gehalten wird. Die ungereinigte und zu filtrierende Ansaugluft strömt gemäß dem Pfeil 18 zunächst in ein Vorabscheidersystem 19. Dieses Vorabscheidersystem 19 besteht aus einzelnenZyklonvorabscheidern, wobei hier stellvertretend für eine Vielzahl von Zyklonvorabscheidern lediglich ein Element gezeigt ist. Dieses Element weist ein Drall erzeugendes Leitelement 20 auf. Durch dieses Element 20 wird die einströmende Rohluft in Rotation versetzt, so daß Staubpartikel gemäß dem Pfeil 21 nach außen geschleudert werden, dort in einenStaubsammelraum 22 gelangen und über das Staubaustragventil 23 ausgetragen werden können. Dievorgereinigte Luft strömt mittig gemäß dem Pfeil 24 nach oben durch eineReinluftöffnung 25 und weiter bis in den äußeren Bereich 26 des nachgeschalteten Filtersystems. Beim Durchströmen dieser Luft durch das Filterelement 12 werden die Restpartikel zurückgehalten, die gereinigte Ansaugluft gelangt in den Reinluftbereich 27 und strömt von dort über die Reinluftöffnung 28 zu der hier nicht dargestellten Brennkraftmaschine.

Figur 2 zeigt in einer Draufsicht die Gestaltung des Gehäuses 10 und damit auch des Filterelements 12. Das Gehäuse 10 ist im wesentlichen oval gestaltet, der Deckel 11 ist über das Scharnier 29 schwenkbar mit dem Gehäuse 10 verbunden. Das Filterelement 12 paßt sich der ovalen Kontur des Gehäuses 10 an und ermöglicht deshalb eine sehr große wirksame Filterfläche. Der Zyklonbereich 19 erstreckt sich nahezu über die gesamte Breite des ovalen Gehäuses 10 und gewährt damit einen hohen Luftdurchsatz. Die gestrichelt dargestellte Linie 30 stellt in Figur 2 und auch in Figur 1 die Kontur der Motorhaube des Fahrzeuges dar. Es ist ersichtlich, daß sich das Filtersystem optimal an diese Kontur anpaßt.

## Patentansprüche

1. Filtersystem, für die Ansaugluft einer Brennkraftmaschine, bestehend aus einem Gehäuse (10), einem in dem Gehäuse angeordneten Filterelement (12) sowie einem das Gehäuse (10) verschließenden Deckel (11), **dadurch gekennzeichnet, dass** sowohl das Gehäuse (10) als auch das Filterelement (12) eine im wesentlichen ovale Kontur aufweist, die an die Kontur (30) einer Abdeckung einer Brennkraftmaschine angepasst ist, wobei das Filtersystem aus einem Vorabscheidersystem (19) aus einzelnen Zyklonvorabscheidern und einem Hauptfilterelement (12), insbesondere aus einem zickzackrtörmig gefalteten Papierfilterelement besteht, wobei in dem Hauptfilterelement (12) ein Sekundärelement (13) oder Sicherheitsfilter vorgesehen ist zur Vermeidung von Staubeintritt beim Austausch des Hauptelements (12), wobei das Sekundärelement (13) ein Filtervlieselement ist.

2. Filtersystem nach Anspruch 1, **dadurch gekennzeichnet, dass** das Hauptfilterelement (12) an seinem, dem Reinluftstutzen zugewandten Ende mit einer außenliegenden Radialdichtung (14) versehen ist und an dem gegenüberliegenden Ende über eine Druckfeder (15) an dem Deckel (11) des Gehäuses (10) abgestützt ist, wobei die Druckfeder (15) eine Axialkraft in Richtung des Reinluftstutzens (28) ausübt.

## Claims

1. Filter system for the intake air of an internal combustion engine, consisting of a housing (10), a filter element (12) disposed in the housing as well as a cover (11) closing the housing (10), **characterized in that** the housing (10) as well as the filter element (12) feature a substantially oval contour which is adapted to the contour (30) of a cover of an internal combustion engine, the filter system consisting of a pre-separator system (19) of individual cyclone pre-separators and a main filter element (12), in particular made of a fanfold paper filter element, a secondary element (13) or a safety filter being provided in the main filter element (12) for preventing the introduction of dust when changing the main element (12), the secondary element (13) being a filter fleece element.

2. Filter system according to claim 1, **characterized in that** the main filter element (12) is provided with an exterior radial sealing (14) at its end that faces the clean air connecting piece and is supported at the opposing end via a compression spring (15) at the cover (11) of the housing (10), the compression spring (15) exerting an axial force in the direction of the clean air connecting piece (28).

## Revendications

1. Système de filtre, pour l'air aspiré d'un moteur à combustion interne, composé d'un boîtier (10), d'un élément filtrant (12) disposé dans le boîtier et d'un couvercle (11) obturant le boîtier (10), **caractérisé en ce que** tant le boîtier (10) que l'élément filtrant (12) présentent un contour essentiellement ovale qui est adapté au contour (30) d'un recouvrement d'un moteur à combustion interne, le système de filtre étant constitué d'un système de pré-séparateur (19) formé de pré-séparateurs à cyclone individuels et d'un élément filtrant principal (12), notamment d'un élément filtrant en papier plié en accordéon, un élément secondaire (13) ou un filtre de sécurité étant prévu dans l'élément filtrant principal (12) pour éviter l'infiltration de poussière lors du remplacement de l'élément principal (12), l'élément secondaire (13) étant un élément en non-tissé filtrant.

2. Système de filtre selon la revendication 1, **caractérisé en ce que** l'élément filtrant principal (12) est pourvu à son extrémité orientée vers la tubulure d'air pur d'un joint radial extérieur (14) et est étayé par un ressort de pression (15), à l'extrémité opposée, sur le couvercle (11) du boîtier (10), le ressort de pression (15) exerçant une force axiale en direction de la tubulure d'air pur (28).
